# EUROPÄISCHE PATENTSCHRIFT

(11) **EP 2 871 497 B1**
(45) Veröffentlichungstag und Bekanntmachung des Hinweises auf die Patenterteilung: **22.02.2017**
(21) Anmeldenummer: 14191485.3
(22) Anmeldetag: 03.11.2014
(51) Int. Cl.: G01V 3/08, G01V 15/00, E04G 15/06, B28B 19/00, B28B 23/00, E04G 21/18

(54) **VERFAHREN ZUM MARKIEREN EINES MESSPUNKTS IN EINER GEGOSSENEN BETONDECKE UND VORRICHTUNG ZUM ORTEN EINES MESSPUNKTS**
METHOD FOR MARKING A MEASUREMENT POINT IN A CAST CONCRETE CEILING AND APPARATUS FOR SIGNALING A MEASUREMENT POINT
PROCÉDÉ DESTINÉ AU REPÉRAGE D'UN POINT DE MESURE DANS UN REVÊTEMENT EN BÉTON COULÉ ET APPAREIL POUR LE TROUVER

(30) Priorität: 06.11.2013 AT 507402013
(43) Veröffentlichungstag der Anmeldung: 13.05.2015
(73) Patentinhaber: KE KELIT Kunststoffwerk Gesellschaft m.b.H., 4020 Linz (AT)
(72) Erfinder: Ratschmann, Elmar, 4202 Hellmonsödt (AT); Pöchhacker, Martin, 3251 Purgstall (AT)
(74) Vertreter: Patentanwaltskanzlei Hübscher

(56) Entgegenhaltungen:
- WO-A1-88/02852
- GB-A- 1 506 541
- GB-A- 2 066 587
- GB-A- 2 407 166
- JP-A- S58 111 776
- US-A1- 2006 288 576

## Beschreibung

Die Erfindung bezieht sich auf ein Verfahren zum Markieren und Orten eines Messpunkts in einer gegossenen Betondecke, wobei die Schalung für die Betondecke mit einem Markierungskörper für den auf der Schalung abgebildeten Messpunkt versehen wird, bevor die Betondecke gegossen wird, sowie auf eine Vorrichtung zur Durchführung des Verfahrens.

Zur Klimatisierung von Räumen ist es bekannt, Wärmetauscher aus durch Abstandhalterprofile zu Flächenregistern zusammengefassten Rohrschlangen für einen Wärmeträger in die Betondecke einzubetten. Diese Flächenregister werden mit einem vorgegebenen Abstand voneinander auf der Schalung verlegt, bevor die Betondecke mit einer entsprechenden Bewehrung gegossen wird. Da beispielsweise bei Bürogebäuden erst nachträglich die Raumaufteilung festgelegt wird, ist dafür zu sorgen, dass die zu errichtenden Trennwände im Zwischenbereich zwischen den Flächenregistern der Wärmetauscher verlaufen, um ein irrtümliches Anbohren der Rohrschlangen zu vermeiden. Zu diesem Zweck werden auf der Schalung für die Betondecke Messpunkte festgelegt, die üblicherweise durch in die Deckenschalung geschlagene Nägel markiert werden. Die mit ihren Köpfen in die gegossene Betondecke vorstehenden Nägel verbleiben beim Entschalen in der Betondecke und bilden Markierungskörper, die den Verlauf der Abstandsfugen zwischen den einzelnen Flächenregistern der Wärmetauscher anzeigen. Da die Nagelspitzen nach unten über die Betondecke vorstehen, werden sie häufig abgetrennt, um das Auftragen einer Putzschicht nicht zu behindern. Damit gehen aber die durch die Nägel gebildeten Markierungspunkte verloren. Werden die Nagelspitzen erst nach dem Auftragen einer Putzschicht gekürzt, so wird die Putzschicht durch die Nägel sichtbar unterbrochen. Außerdem besteht die Gefahr, dass sich durch die Korrosion der Nägel Rostflecken in der Putzschicht abzeichnen.

Das Dokument CA02737488C beschreibt ein Verfahren zum Orten von elektrischen Installationen mit zwei Magneten, welche in einer Trockenwand montiert sind. Der erste Magnet ist in der Wand unsichtbar an der elektrischen Installation montiert und der zweite Magnet wird in einer Führung beweglich außerhalb der Wand gehalten. Die Interaktion von beiden Magneten hilft beim Orten der Installation.

Das Dokument GB2066587A beschreibt eine Vorrichtung zum Orten und zum Markieren von Messpunkten, welche im Inneren einer Trockenwand angeordnet sind. Zum Orten der Messpunkte, wird ein Ortungsring aus magnetischem Material verwendet.

Der Erfindung liegt somit die Aufgabe zugrunde, eine gegossene Betondecke mit Flächenregistern zur Raumklimatisierung so mit Markierungskörpern auszustatten, dass die Markierungskörper ohne Beeinträchtigung der auf der Unterseite der Betondecke aufgebrachten Putzschicht in einfacher Weise erfasst werden können.

Ausgehend von einem Verfahren der eingangs geschilderten Art löst die Erfindung die gestellte Aufgabe dadurch, dass als Markierungskörper ein aus einem ferromagnetischen oder magnetischen Werkstoff gefertigter Markierungsring konzentrisch zum Messpunkt an der Schalung lösbar befestigt wird und dass zum Orten des nach der Entschalung in der Betondecke verbleibenden, durch eine Putzschicht abgedeckten Markierungsrings ein frei beweglich gelagerter magnetischer oder ferromagnetischer Ortungsring entlang der Putzschicht bewegt und koaxial zum Markierungsring über das Magnetfeld des Ortungsrings und/oder des Markierungsrings an die Putzschicht angezogen wird.

Aufgrund der lösbaren Befestigung der Markierungsringe auf der Schalung für die Betondecke kann die gegossene Betondecke nach ihrer Aushärtung entschalt werden, ohne die Markierungsringe aus der Betondecke zu lösen. Die zufolge ihrer Befestigung auf der Schalung bündig mit der Betondecke abschließenden Markierungsringe stellen keine Beeinträchtigungen für das Aufbringen einer Putzschicht auf der Unterseite der Betondecke dar, sodass eine durchgehende Putzschicht mit einer störungsfreien Sichtfläche gewährleistet werden kann. Trotzdem können die Markierungsringe einfach durch die Putzschicht hindurch geortet werden, weil sie aus einem ferromagnetischen oder magnetischen Werkstoff gefertigt sind und daher mit Hilfe eines magnetischen Ortungsrings oder bei einem magnetischen Markierungsring auch durch einen ferromagnetischen Ortungsring erfasst werden können. Die Ortungsringe und die Markierungsringe werden gegenseitig durch das zwischen ihnen wirkende Magnetfeld angezogen, wenn die Ortungsringe entlang der Putzschicht in den Bereich der Markierungsringe gelangen. Um den jeweiligen Messpunkt auf der Putzschicht festzulegen, ist somit der Ortungsring frei beweglich in einer Führung zu lagern, sodass er aufgrund des magnetischen Feldlinienverlaufs koaxial zum jeweiligen Markierungsring an die Putzschicht angezogen wird. Da die Markierungsringe konzentrisch zu den Messpunkten an der Schalung befestigt wurden, legt der koaxial zu den Markierungsringen magnetisch gehaltene Ortungsring den jeweiligen Messpunkt mit hinreichender Genauigkeit fest, der durch den angezogenen Ortungsring hindurch auf der Putzschicht angezeichnet oder durch den Ortungsring hindurch in die Putzschicht gebohrt werden kann.

Die Vorrichtung zum Orten von in eine Betondecke eingegossenen, durch eine Putzschicht abgedeckten Markierungskörper aus einem ferromagnetischen oder magnetischen Werkstoff zeichnet sich durch einen magnetischen oder ferromagnetischen Ortungsring aus, der um ein an einander diametral gegenüberliegenden Umfangsseiten des Ortungsrings angreifendes zwischen zwei Schenkels einer Führung auslenkbares Zugmittel drehbar gelagert ist. Da wegen der größeren wirksamen Kräfte vorzugsweise die Markierungsringe in der Betondecke wie die Ortungsringe magnetisch ausgebildet sind, ist der Ortungsring so frei beweglich zu lagern, dass er im Bereich eines magnetischen Markierungsrings nicht nur an die Putzschicht angezogen und auf der Putzschicht koaxial zum Markierungsring ausgerichtet, sondern auch um einen Durchmesser um 180° gedreht werden kann, um die Polarisierung des magnetischen Markierungsrings zu berücksichtigen und nicht Gefahr zu laufen, dass ein undrehbar gehaltener Ortungsring vom magnetischen Markierungsring abgestoßen wird.

Eine solche allen Anforderungen in einfacher Weise entsprechende Lagerung des Ortungsrings wird durch ein Zugmittel ermöglicht, das an einander diametral gegenüberliegenden Umfangsseiten des Ortungsrings angreift und eine Drehung des Ortungsrings um die Zugmittelachse erlaubt.

Die zur Ausrichtung des Ortungsrings gegenüber einem Markierungsring in der Betondecke erforderliche Verlagerungsmöglichkeit des Ortungsrings bedingt eine Auslenkung des zwischen zwei Schenkeln einer Führung gehaltenen Zugmittels. Zu diesem Zweck kann das federelastische Zugmittel zwischen den Schenkeln der Führung gespannt gehalten werden, sodass die Auslenkung aufgrund der federelastischen Dehnung erfolgt. Die federnden Spannkräfte bedingen allerdings ausreichende Magnetkräfte zur Verlagerung des Ortungsrings entgegen der federelastischen Vorspannung. Die Auslenkung des Zugmittels ohne Überwindung einer Federkraft kann durch ein Zugmittel sichergestellt werden, das in Bezug auf den gegenseitigen Schenkelabstand der Führung eine Überlänge aufweist. Der Ortungsring, der vorzugsweise in der Längsmitte des Zugmittels angeordnet ist, kann in diesem Fall im Rahmen der Überlänge des Zugmittels frei bewegt werden.

Anhand der Zeichnung wird das erfindungsgemäße Verfahren näher erläutert. Es zeigen
- Fig. 1: eine nach dem erfindungsgemäßen Verfahren markierte, gegossene Betondecke im Bereich eines Markierungskörpers in einem Querschnitt und
- Fig. 2: eine erfindungsgemäße Vorrichtung zum Orten von in eine Betondecke eingegossenen Markierungskörpern in einer zum Teil aufgerissenen Seitenansicht.

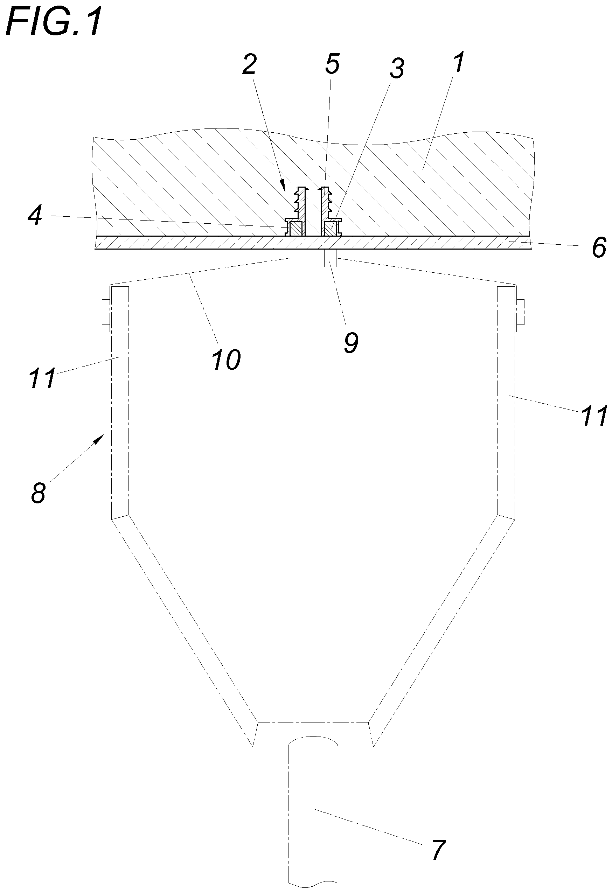

Wie der Fig. 1 entnommen werden kann, sind in der gegossenen Betondecke 1 Markierungskörper 2 zum Festlegen von Messpunkten eingegossen. Diese Markierungskörper 2 umfassen einen magnetischen Markierungsring 3, der in eine stirnseitig offene Ringkammer 4 am Ende einer Kunststoffhülse 5 eingesetzt ist. Dieser Markierungskörper 2 wird vor dem Gießen der Betondecke 1 auf deren Schalung lösbar befestigt, sodass sich beim Entschalen der ausgehärteten Betondecke 1 die Markierungskörper 2 von der Schalung lösen und in der Betondecke 1 verbleiben. Nach dem Auftragen einer Putzschicht 6 auf die Unterseite der Betondecke 1 werden die Markierungskörper 2 abgedeckt und müssen im Bedarfsfall wieder geortet werden.

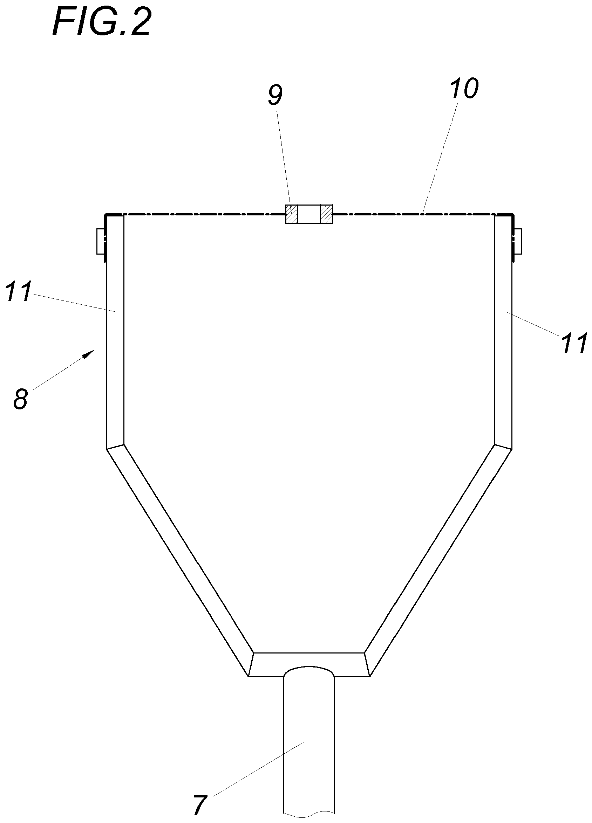

Zu diesem Zweck ist gemäß der Fig. 2 eine mit einem Handgriff 7 versehene Führung 8 für einen magnetischen Ortungsring 9 vorgesehen, der mit Hilfe eines Zugmittels 10 zwischen zwei Schenkeln 11 der Führung 8 auslenkbar gehalten wird. Das Zugmittel 10 greift an einander diametral gegenüberliegenden Umfangsseiten am Ortungsring 9 an, sodass der Ortungsring 9, der in der Längsmitte des Zugmittels 10 angeordnet ist, um die Zugmittelachse gedreht werden kann. Im dargestellten Fall ist das Zugmittel 10 in Form eines Gummizugs federelastisch ausgebildet, sodass das Zugmittel 10 nach allen Seiten ausgelenkt werden kann, wenn der magnetische Ortungsring 9 einer entsprechenden Anziehungskraft unterliegt.

Um einen Markierungskörper 2 in der Betondecke 1 zu orten und den durch diesen Markierungskörper 2 bestimmten Messpunkt auf der Putzschicht 6 festzulegen, wird die Führung 8 über den Handgriff 7 so entlang der Putzschicht 6 geführt, dass der Ortungsring 9 in den magnetischen Einflussbereich des magnetischen Markierungsrings gelangt, wie dies in der Fig. 1 durch die strichpunktiert angedeutete Ortungsvorrichtung eingezeichnet ist. Aufgrund der wirksamen Magnetkräfte wird der magnetische Ortungsring 9 unter einer Auslenkung des sich dehnenden Zugmittels 10 und allenfalls nach einer Drehung um das Zugmittel 10 durch den ortsfest in der Betondecke 1 festgelegten Markierungsring 3 an die Putzschicht 6 angezogen, und zwar koaxial zum Markierungsring 3. Die Drehung des Ortungsrings 9 erfolgt immer dann, wenn einander gleichnamige Pole des Ortungsrings 9 und des Markierungsrings zugekehrt sind. Der durch den Markierungskörper 2 festgelegte Messpunkt kann somit durch den an die Putzschicht 6 angezogenen Ortungsring 9 hindurch angezeichnet werden. Es ist aber auch möglich, die Putzschicht 6 durch den Ortungsring 9 hindurch anzubohren.

Die Erfindung ist selbstverständlich nicht auf das dargestellte Ausführungsbeispiel beschränkt. So könnte das Zugmittel 10 eine in Bezug auf den gegenseitigen Abstand der Schenkel 11 der Führung 8 eine Überlänge aufweisen, sodass der magnetische Ortungsring 9 im Rahmen dieser Überlänge frei beweglich verlagert werden kann. Außerdem müsste der Ortungsring 9 nicht aus einem magnetischen Werkstoff gefertigt sein, sondern könnte auch aus einem ferromagnetischen Werkstoff bestehen, wenn die Markierungsringe 3 Permanentmagneten bilden.

## Patentansprüche

1. Verfahren zum Markieren und Orten eines Messpunkts in einer gegossenen Betondecke (1), wobei die Schalung für die Betondecke (1) mit einem Markierungskörper (2) für den auf der Schalung abgebildeten Messpunkt versehen wird, bevor die Betondecke (1) gegossen wird, **dadurch gekennzeichnet, dass** als Markierungskörper (2) ein aus einem ferromagnetischen oder magnetischen Werkstoff gefertigter Markierungsring (3) konzentrisch zum Messpunkt an der Schalung lösbar befestigt wird und dass zum Orten des nach der Entschalung in der Betondecke (1) verbleibenden, durch eine Putzschicht (6) abgedeckten Markierungsrings (3) ein in einer Führung (8) frei beweglich gelagerter magnetischer oder ferromagnetischer Ortungsring (9) durch die Führung (8) entlang der Putzschicht (6) bewegt und koaxial zum Markierungsring (3) über das Magnetfeld des Ortungsrings (9) und/oder des Markierungsrings (3) an die Putzschicht (6) angezogen wird.

2. Vorrichtung zum Orten von in eine Betondecke (1) eingegossenen, durch eine Putzschicht (6) abgedeckten Markierungskörpern (2) zum Markieren von Messpunkten gemäß Anspruch 1, **gekennzeichnet durch** einen magnetischen oder ferromagnetischen Ortungsring (9), der um ein an einander diametral gegenüberliegenden Umfangsseiten des Ortungsrings (9) angreifendes, zwischen zwei Schenkeln (11) der Führung (8) auslenkbares Zugmittel (10) drehbar gelagert ist.

3. Vorrichtung nach Anspruch 2, **dadurch gekennzeichnet, dass** das federelastische Zugmittel (10) zwischen den Schenkeln (11) der Führung (8) gespannt ist.

4. Vorrichtung nach Anspruch 2, **dadurch gekennzeichnet, dass** das Zugmittel (10) in Bezug auf den gegenseitigen Schenkelabstand eine Überlänge aufweist.

## Claims

1. Method for marking and locating a measurement point in a cast concrete ceiling (1), wherein the formwork for the concrete ceiling (1) is provided with a marking body (2) for the measurement point displayed on the formwork, before the concrete ceiling (1) is cast, **characterised in that** as the marking body (2) a marking ring (3) which is manufactured from a ferromagnetic or magnetic material is detachably fastened to the formwork in a concentric manner with respect to the measurement point and that in order to locate the marking ring (3) which remains in the concrete ceiling (1) after removal of the formwork and is covered by a render layer (6) a magnetic or ferromagnetic locating ring (9), which is mounted in a freely movable manner in a guide (8), is moved by the guide (8) along the render layer (6) and is attracted to the render layer (6) in a coaxial manner with respect to the marking ring (3) by means of the magnetic field of the locating ring (9) and/or of the marking ring (3).

2. Device for locating marking bodies (2), which are cast into a concrete ceiling (1) and are covered by a render layer (6), for marking measurement points as claimed in claim 1, **characterised by** a magnetic or ferromagnetic locating ring (9) which is mounted so as to be able to rotate about a traction means (10) which acts upon mutually diametrically opposite peripheral sides of the locating ring (9) and can be deflected between two limbs (11) of the guide (8).

3. Device as claimed in claim 2, **characterised in that** the spring-elastic traction means (10) is tensioned between the limbs (11) of the guide (8).

4. Device as claimed in claim 2, **characterised in that** the traction means (10) has an excess length in relation to the mutual limb spacing.

## Revendications

1. Procédé de marquage et de localisation d'un point de mesure dans une dalle de béton (1) coulée, le coffrage pour la dalle de béton (1) étant munie d'un corps de marquage (2) pour le point de mesure formé sur le coffrage avant que la dalle de béton (1) ne soit coulée, **caractérisé en ce qu'**en tant que corps de marquage (2), un anneau de marquage (3) fabriqué en matériau ferromagnétique ou magnétique est fixé librement sur le coffrage et concentriquement au point de mesure et que pour localiser l'anneau de marquage (3) couvert d'une couche d'enduit (6), restant dans la dalle de béton (1) après le retrait du coffrage, une bague de localisation (9) magnétique ou ferromagnétique montée librement mobile dans un guidage (8) se déplace le long de la couche d'enduit (6) de par le guidage (8) et est tirée coaxialement à l'anneau de marquage (3) par l'intermédiaire du champ magnétique de la bague de localisation (9) et/ou de l'anneau de marquage (3) au niveau de la couche d'enduit (6).

2. Dispositif de localisation de corps de marquage (2) couverts d'une couche d'enduit (6), coulés dans une dalle de béton (1), pour le marquage de points de mesure selon la revendication 1, **caractérisé par** une bague de localisation (9) ferromagnétique ou magnétique, qui est placée pouvant tourner autour d'un moyen de traction (10), orientable entre deux branches (11) du guidage (8), en prise au niveau des cotés périphériques, diamétralement opposés l'un à l'autre, de la bague de localisation (9).

3. Procédé selon la revendication 2, **caractérisé en ce que** le moyen de traction (10), élastique à ressort, est tendu entre les branches (11) du guidage (8).

4. Procédé selon la revendication 2, **caractérisé en ce que** le moyen de traction (10) présente une surlongueur en ce qui concerne l'espacement des branches mutuel.
